# EUROPÄISCHE PATENTANMELDUNG

(11) **EP 4 568 052 A1**
(43) Veröffentlichungstag der Anmeldung: **11.06.2025**
(21) Anmeldenummer: 23214319.8
(22) Anmeldetag: 05.12.2023
(51) Int. Cl.: H02J 3/46, H02J 13/00

(54) **STEUERUNG EINES HIERARCHISCH STRUKTURIERTEN STROMNETZES**

(71) Anmelder: Siemens Aktiengesellschaft, 80333 München (DE)
(72) Erfinder: Duckheim, Mathias, 91052 Erlangen (DE); Heuer, Christian, 21220 Seevetal (DE); Metzger, Michael, 85570 Markt Schwaben (DE); Stursberg, Paul, 80469 München (DE); Tomaselli, Domenico, 81673 München (DE)
(74) Vertreter: Siemens Patent Attorneys

(57) **Zusammenfassung**

Es wird ein Verfahren zur Steuerung eines Stromnetzes (1) mittels einer Mehrzahl von Steuermodulen (M1-M1000) angegeben, wobei das Stromnetz (1) hierarchisch in eine Mehrzahl von Systemebenen (S1-S3) strukturiert ist, umfassend die folgenden Schritte:
a) Auswählen einer der Systemebenen (S1),
b) Festlegen eines ersten Betriebsziels, welches der ausgewählten Systemebene (S1) zugeordnet ist und welches einer ausgewählten Abstraktionsebene (A1) für Zielvorgaben zugeordnet ist,
c) Bereitstellen einer Topologie des Stromnetzes (1),
d) Aufrufen eines mit dem ersten Betriebsziel assoziierten ersten Steuermoduls (M1), wobei das Aufrufen des ersten Steuermoduls (M1) die folgenden Teilschritte zur Folge hat:
d1) Identifizieren wenigstens eines Hilfsmoduls (M10,M20) des ersten Steuermoduls (M1), wobei das Hilfsmodul (M10,M20) einer bezüglich der ausgewählten Systemebene (S1) und/oder bezüglich der ausgewählten Abstraktionsebene (A1) untergeordneten hierarchischen Ebene zugeordnet ist,
d2) Anfordern wenigstens einer Zustandsinformation bei wenigstens einem Hilfsmodul (M10,M20) und Empfangen der Zustandsinformation,
d3) Ermitteln wenigstens eines untergeordneten Betriebsziels unter Verwendung des ersten Betriebsziels und der empfangenen Zustandsinformation sowie
d4) Übermitteln des untergeordneten Betriebsziels an ein damit assoziiertes Hilfsmodul (M10,M20) und Aufrufen dieses assoziierten Hilfsmoduls (M10,M20).

## Beschreibung

Die vorliegende Erfindung betrifft ein Verfahren zur Steuerung eines Stromnetzes, welches hierarchisch in eine Mehrzahl von Systemebenen strukturiert ist, mit einer Mehrzahl von Steuermodulen. Weiterhin betrifft die Erfindung ein entsprechendes System zur Steuerung eines hierarchisch strukturierten Stromnetzes sowie ein Computerprogrammprodukt zur Ausführung des Verfahrens.

Aus dem Stand der Technik sind Verfahren zur Steuerung von Stromnetzen bekannt, die dazu beitragen, verschiedene konkurrierende Betriebsziele zu erreichen. Dabei kann es sich beispielsweise um ökologische Ziele, wirtschaftliche Ziele und Stabilitäts-Ziele handeln, die jeweils in Konkurrenz zueinander stehen. Die gleichzeitige Berücksichtigung solcher Betriebsziele wird in modernen Stromnetzen zunehmend aufwendiger. Einerseits kommen mehr und mehr dezentrale Stromerzeuger wie Photovoltaik-Anlagen und Windkraft-Anlagen hinzu, welche im Gegensatz zu herkömmlichen Kraftwerken in ihrer Einspeiseleistung stärker schwanken und schwerer planbar sind. Andererseits tritt auch eine höhere Anzahl an Verbrauchern mit zeitlich schwankender Leistungsaufnahme hinzu, z.B. durch die zunehmende Installation von Wärmepumpen und von Ladestationen für Elektrofahrzeuge.

Elektrische Versorgungsnetze (Stromnetze) für größere Regionen oder ganze Länder sind hierarchisch strukturiert und weisen typischerweise mehrere Netzebenen mit unterschiedlichen Wechselspannungs-Niveaus auf. Auch innerhalb einer Netzebene können hierarchische Unterstrukturen vorliegen, so dass z.B. ein Verteilnetz in mehrere unabhängige topologische Netzstränge und jeder Netzstrang wiederum in einzelne Zweige untergliedert sein kann. Eine Problematik besteht generell darin, die übergeordneten Betriebsziele des gesamten Stromnetzes möglichst gut zu erreichen, obwohl die zugrundeliegenden Netzstrukturen immer komplexer und feingranularer werden und die relevanten Aktoren vor allem auf den unteren Netzebenen angeordnet sind, in denen mehr und mehr dezentrale Stromerzeuger und Stromverbraucher hinzutreten. Eine automatisierte Steuerung unter Berücksichtigung von Simulationen zur Einspeiseleistung und zum Verbrauch findet dabei heutzutage vor allem auf übergeordneten Netzebenen statt, insbesondere im Übertragungsnetz. In den hierarchisch untergeordneten Verteilnetzen werden immer mehr intelligente Steuerungskonzepte zur Steuerung der einzelnen dezentralen Erzeuger und Verbraucher umgesetzt, um die maßgeblichen lokalen Betriebsziele der jeweiligen Netzebene zu erreichen, beispielsweise die Einhaltung von vorgegebenen Spannungsbändern und die Minimierung von Verlusten. Eine gleichzeitige und untereinander abgestimmte Steuerung der Vielzahl an Komponenten des Stromnetzes im Hinblick auf die konkurrierenden übergeordneten Betriebsziele des gesamten Netzes ist jedoch mit großen Schwierigkeiten verbunden. Der hierfür benötigte apparative Aufwand beim Ausbau des Stromnetzes wird voraussichtlich sehr hoch sein.

Aufgabe der Erfindung ist es daher, ein Verfahren zur Steuerung eines Stromnetzes anzugeben, welches die genannten Schwierigkeiten überwindet. Insbesondere sollen Wege für eine Steuerung von Aktoren im Bereich dezentraler Komponenten des Stromnetzes bereitgestellt werden, welche einen verbesserten Betrieb im Hinblick auf die konkurrierenden übergeordneten Betriebsziele ermöglichen. Weiterhin sollen ein entsprechendes Steuerungssystem sowie ein entsprechendes Computerprogrammprodukt zur Verfügung gestellt werden.

Diese Aufgaben werden durch das in Anspruch 1 beschriebene Verfahren, das in Anspruch 14 beschriebene System und das in Anspruch 15 beschriebene Computerprogrammprodukt gelöst.

Das erfindungsgemäße Verfahren dient zur Steuerung eines Stromnetzes mittels einer Mehrzahl von Steuermodulen, wobei das Stromnetz hierarchisch in eine Mehrzahl von Systemebenen strukturiert ist. Das Verfahren umfasst die folgenden Schritte:
a) Auswählen einer der Systemebenen,
b) Festlegen eines ersten Betriebsziels, welches der ausgewählten Systemebene zugeordnet ist und welches einer ausgewählten Abstraktionsebene für Zielvorgaben zugeordnet ist,
c) Bereitstellen einer Topologie des Stromnetzes,
d) Aufrufen eines mit dem ersten Betriebsziel assoziierten ersten Steuermoduls, wobei das Aufrufen des ersten Steuermoduls die folgenden Teilschritte zur Folge hat:
   d1) Identifizieren wenigstens eines Hilfsmoduls des ersten Steuermoduls, wobei das Hilfsmodul einer bezüglich der ausgewählten Systemebene und/oder bezüglich der ausgewählten Abstraktionsebene untergeordneten hierarchischen Ebene zugeordnet ist,
   d2) Anfordern wenigstens einer Zustandsinformation bei wenigstens einem Hilfsmodul und Empfangen der Zustandsinformation,
   d3) Ermitteln wenigstens eines untergeordneten Betriebsziels unter Verwendung des ersten Betriebsziels und der empfangenen Zustandsinformation sowie
   d4) Übermitteln des untergeordneten Betriebsziels an ein damit assoziiertes Hilfsmodul und Aufrufen dieses assoziierten Hilfsmoduls.

Das Stromnetz ist also hierarchisch strukturiert und kann z.B. wie das deutsche Stromnetz oder Stromnetze anderer Länder oder größerer Regionen in verschiedene Netzebenen strukturiert sein, die insbesondere bei verschiedenen Wechselspannungs-Niveaus betrieben werden. Die genannten Systemebenen können diesen Netzebenen zugeordnet sein. Allerdings muss hier keine Eins-zu-eins-Zuordnung zwischen Netzebenen und Systemebenen vorliegen, sondern die jeweilige Netzebene kann zusätzlich in hierarchische Unterebenen gegliedert sein und somit eine Mehrzahl von Systemebenen enthalten. So kann z.B. eine Netzebene in eine Mehrzahl von Netzsträngen unterteilt sein, und die Netzstränge können ggf. zusätzlich in einzelne Zweige unterteilt sein, so dass sich eine feinere hierarchische Gliederung ergibt als die Unterteilung in die Netzebenen.

Ein Steuermodul dient zur Steuerung von ein oder mehreren Komponenten des Stromnetzes, wobei diese Komponenten insbesondere sogenannte Netzbetriebsmittel (Assets) sein können. Dabei soll im vorliegenden Zusammenhang eine Steuerung allgemein auch eine Regelung umfassen. Die genannten Hilfsmodule (kurz für "Hilfs-Steuerungsmodule") sollen generell auch zur Gruppe der Steuerungsmodule gehören. Die Steuermodule sind insbesondere zur automatisierten Steuerung des Stromnetzes ausgebildet. Ein Steuermodul ist dabei eine logische funktionale Einheit, deren Funktionalität beispielsweise in einer Software-Applikation implementiert sein kann. Diese Software-Applikation kann auf einer Hardware-Komponente installiert sein bzw. laufen, so dass sich insgesamt ein Funktionsbaustein ergibt, welcher die Funktionalität von einem oder auch mehreren Steuermodulen bereitstellt. Das jeweilige Steuermodul kann ein oder mehrere Sensoren zur Erfassung von Messwerten und/oder Stellgrößen umfassen oder zumindest Zugriff auf ein oder mehrere solche Sensoren haben. Alternativ oder zusätzlich kann das jeweilige Steuermodul ein oder mehrere Aktoren umfassen bzw. Zugriff darauf haben. Die jeweiligen Aktoren sind dazu ausgestaltet, eine Zustandsänderung im Stromnetz zu bewirken.

Die einzelnen Steuermodule sind jeweils bestimmten Systemebenen des hierarchischen Stromnetzes zugeordnet. Diese Zuordnung ergibt sich daraus, in welcher Systemebene die Hardware, auf der Funktionalität der Steuerung implementiert ist, physikalisch angeordnet ist. Insbesondere ist das jeweilige Steuermodul der obersten Systemebene zugeordnet, auf der die in ihm enthaltenen oder mit ihm verknüpften Sensoren und/oder Aktoren physikalisch angeordnet sind. Vorteilhaft ist dabei die genannte Mehrzahl von Steuermodulen auf eine Mehrzahl von Systemebenen und insbesondere sogar auf eine Mehrzahl von Netzebenen verteilt. Mit anderen Worten sind die einzelnen Steuermodule zumindest teilweise unterschiedlichen Systemebenen zugeordnet, so dass das Stromnetz auf unterschiedlichen Hierarchieebenen gesteuert werden kann.

Dem in Schritt b) festgelegten erste Betriebsziel ist sowohl eine Systemebene als auch eine Abstraktionsebene zugeordnet. Die Zuordnung zwischen Betriebsziel und Systemebene ergibt sich daraus, für welche Systemebene das Betriebsziel spezifiziert ist. So ist zum Beispiel einem Betriebsziel für die Netzstabilität in einem (gesamten) Mittelspannungs-Verteilnetz die oberste Systemebene dieses Mittelspannungs-Verteilnetzes zugeordnet. Dagegen ist einem Betriebsziel für die Verluste in einem einzelnen Niederspannungs-Netzstrang die Systemebene dieses einzelnen Netzstrangs zugeordnet. Typischerweise werden auch untergeordnete Systemebenen Einfluss auf ein Betriebsziel haben, das einer bestimmten höheren Systemebene zugeordnet ist. Die Zuordnung ergibt sich damit also über die höchste Systemebene, die einen physikalischen Einfluss auf die Erreichung des jeweiligen Betriebsziels hat. Ein Betriebsziel, das einer bestimmten Systemebene zugeordnet ist, ist auch mit wenigstens einem Steuermodul innerhalb dieser Systemebene assoziiert. Diese Assoziation ergibt sich daraus, dass das assoziierte Steuermodul eine Steuerung ermöglicht, mit der das jeweilige Betriebsziel (bzw. dessen Erreichung) beeinflusst werden kann. Dementsprechend können auch mehrere Steuermodule innerhalb der jeweils relevanten Systemebene mit einem gegebenen Betriebsziel assoziiert sein. Im Rahmen der vorliegenden Erfindung wird in Schritt d) zumindest ein solches "assoziiertes Steuermodul" aufgerufen, welches der Systemebene des Betriebsziels zugeordnet ist und über welches die Erreichung des Betriebsziels beeinflusst werden kann. Allgemein können auch mehrere solche assoziierte Steuermodule aufgerufen werden. Besonders vorteilhaft wird aber für ein gegebenes erstes Betriebsziel jeweils nur ein erstes assoziiertes Steuermodul direkt aufgerufen, und der Aufruf weiterer Steuermodule erfolgt hierarchisch von diesem ersten Steuermodul aus, z.B. als Hilfsmodul im Rahmen von Teilschritt d4) oder als untergeordnetes Hilfsmodul in einem analogen untergeordneten Teilschritt.

In ähnlicher Weise ergibt sich die Zuordnung zwischen Betriebsziel und Abstraktionsebene aus der höchsten Abstraktionsebene der messbaren Werte, die einen Einfluss auf das jeweilige Betriebsziel haben. Es wird dabei allgemein vorausgesetzt, dass das in Schritt b) festgelegte Betriebsziel ein messbares Betriebsziel ist, welches z.B. aus messbaren physikalischen und/oder wirtschaftlichen Größen und/oder ggf. anderen messbaren Größen zusammengesetzt ist. Entsprechendes gilt auch für die untergeordneten Betriebsziele der Schritte d3) und d4) und ggf. auch für relevante weiter untergeordnete Betriebsziele. Unter einer "Abstraktionsebene" eines Betriebsziels wird hier allgemein die hierarchische Ebene verstanden, in der das Betriebsziel über eine oder mehrere messbare Größen definiert ist. Entsprechend ist ein Betriebsziel zu einer einzelnen direkt messbaren Größe ein hierarchisch vergleichsweise untergeordnetes Betriebsziel und ein Betriebsziel, welches aus mehreren solchen Messgrößen zusammensetzt, ein vergleichsweise übergeordnetes Betriebsziel. Die genannte "Abstraktionsebene" der Ziele kann somit auch als "Aggregationsebene" bezeichnet werden. Allgemein gilt, dass Ziele einer höheren Abstraktionsebene aus messbaren Größen (und ggf. anderen relevanten Parametern wie z.B. Gewichtungsfaktoren) einer vergleichsweise niedrigeren Abstraktionsebene zusammengesetzt sind. Anders ausgedrückt kann ein übergeordnetes Ziel von ein oder mehreren untergeordneten Zielen (bzw. den damit verknüpften Messgrößen) funktional abhängig sein. Entsprechend kann ein Betriebsziel einer höheren Abstraktionsebene häufig in mehrere Teilziele einer niedrigeren Abstraktionsebene zerlegt werden. Dies kann für mehrere hierarchische Ebenen entsprechend fortgesetzt werden, falls die Abstraktionsebene des gegebenen ersten Betriebsziels ausreichend hoch ist.

Das in Schritt b) festgelegte Betriebsziel kann beispielsweise manuell durch einen Nutzer eingeben werden. Alternativ kann es auch innerhalb eines übergeordneten automatisierten Verfahrens festgelegt werden. Wesentlich für die vorliegende Erfindung ist nur, dass hier ein vergleichsweise übergeordnetes Betriebsziel festgelegt wird, wobei dann in Schritt d) ein automatisiertes Verfahren durchgeführt wird, das eine Steuerung des Stromnetzes im Hinblick auf eine möglichst gute Erreichung dieses ersten Betriebsziels erlaubt. Hierzu kann zumindest Schritt d) mit seinen jeweiligen Teilschritten vorteilhaft automatisiert und insbesondere computergestützt erfolgen.

Auch die Bereitstellung der Topologie des Stromnetzes in Schritt c) kann automatisiert erfolgen. Alternativ kann die Topologie aber auch schon grundsätzlich bekannt sein und z.B. als Netzmodell in einer Datenbank gespeichert und von dort aus abrufbar sein. Unter der "Topologie" des Stromnetzes wird hier allgemein eine Information über die Art der Verknüpfung der einzelnen Stromleitungen zu einem übergeordneten Netz verstanden. Diese topologische Information muss nicht für das gesamte Stromnetz vollständig vorliegen. Es reicht zur Realisierung der Erfindung aus, wenn die Topologie zumindest näherungsweise bekannt ist. Insbesondere kann eine näherungsweise bekannte topologische Information für die ausgewählte Systemebene vorliegen, welche dem ersten Betriebsziel zugeordnet ist und in welchem das erste Steuermodul vorliegt. Zweckmäßig kann zusätzlich für ein oder mehrere untergeordnete Systemebenen eine näherungsweise bekannte topologische Information vorliegen, insbesondere für die Systemebene(n) des wenigstens einen Hilfsmoduls, das in Schritt d) und optional in ähnlichen untergeordneten Schritten adressiert wird. Eine solche begrenzte Kenntnis der Topologie des Stromnetzes reicht aus, um im Rahmen der Erfindung ein Adressieren von relevanten Hilfsmodulen und untergeordneten Hilfsmodulen zu ermöglichen. Insbesondere können in Teilschritt d1) unter Verwendung dieser topologischen Information ein oder mehrere für die Erreichung des ersten Betriebsziels relevante Hilfsmodule identifiziert werden. Die topologische Information wird also von dem in Schritt d) aufgerufenen ersten Steuermodul zumindest beim Identifizieren seiner Hilfsmodule verwendet. Auch beim Ermitteln von einem oder mehreren untergeordneten Betriebszielen (also insbesondere einer Zerlegung des Betriebsziels in relevante Teilziele) in Schritt d3) kann die bereitgestellte topologische Information benutzt werden.

Insgesamt bewirkt der Aufruf des ersten Steuermoduls in Schritt d) eine Steuerung des Stromnetzes im Hinblick auf die Erreichung des ersten Betriebsziels. Das in Schritt d) aufgerufene Steuermodul ist sowohl der ausgewählten Systemebene als auch der ausgewählten Abstraktionsebene für Zielvorgaben zugeordnet. Bei der Steuerung wird die hierarchische Struktur des Stromnetzes und/oder die hierarchische Struktur der maßgeblichen Betriebsziele genutzt, und es wird zumindest ein Hilfsmodul genutzt, welches einer dazu untergeordneten hierarchischen Ebene zugeordnet ist. Das Hilfsmodul kann dabei entweder bezüglich der zugehörigen Systemebene oder bezüglich der Abstraktionsebene des ihm zugehörigen Betriebsziels untergeordnet sein oder beides. Hierbei wird allgemein vorausgesetzt, dass auch das jeweilige Hilfsmodul mit einem entsprechenden Betriebsziel assoziiert ist, in analoger Weise wie das erste Steuermodul mit dem ersten Betriebsziel assoziiert ist. Somit ist auch das wenigstens eine Hilfsmodul einer bestimmten Abstraktionsebene für Zielvorgaben zugeordnet. Das mit dem Hilfsmodul assoziierte Betriebsziel ist dabei im Verhältnis zum ersten Betriebsziel aus Schritt b) ein "untergeordnetes Betriebsziel" in dem Sinne, dass es für eine untergeordnete Systemebene und/oder auf einer untergeordneten Abstraktionsebene für Zielvorgaben definiert ist.

Beim Aufruf des ersten Steuermoduls wird im Teilschritt d1) unter Nutzung der topologischen Information wenigstens ein hierarchisch untergeordnetes Hilfsmodul identifiziert und insbesondere werden zweckmäßig mehrere solche Hilfsmodule identifiziert. In Schritt d2) werden von wenigstens einem der identifizierten Hilfsmodule ein oder mehrere Zustandsdaten zum Betriebszustand des Stromnetzes empfangen. Diese Zustandsdaten können insbesondere messbare physikalische Größen sein, welche über Sensoren der jeweiligen Hilfsmodule gemessen werden. So erhält das erste Steuermodul wenigstens einen physikalischen Messwert, welcher entweder aus einem hierarchisch untergeordneten Teil des Stromnetzes (untergeordnete Systemebene) stammt und/oder einem hierarchisch untergeordneten Betriebsziel zugeordnet ist. In Teilschritt d3) wird wenigstens ein untergeordnetes Betriebsziel ermittelt. Besonders zweckmäßig werden hier mehrere untergeordnete Betriebsziele ermittelt, mit anderen Worten wird also das übergeordnete erste Betriebsziel in mehrere untergeordnete Teilziele zerlegt, von denen es funktional abhängt. Dieses Vorgehen wird auch als Disaggregation bezeichnet, wobei im Stand der Technik verschiedene Verfahren zur automatisierten Disaggregation von übergeordneten Zielen in relevanten Teilziele bekannt sind. Allgemein erfolgt die Ermittlung des wenigstens einen untergeordneten Betriebsziels unter Verwendung des ersten Betriebsziels und der in Schritt d2) empfangenen Zustandsinformation. Dies kann beispielsweise durch ein mathematisches Optimierungsverfahren im Hinblick auf das übergeordnete Betriebsziel und unter Nutzung der aktuellen Zustandsinformation erfolgen.

Das wenigstens eine untergeordnete Betriebsziel wird im Teilschritt d4) an ein damit assoziiertes Hilfsmodul übermittelt und dieses Hilfsmodul wird aufgerufen. Das Hilfsmodul ist in analoger Weise mit dem untergeordneten Betriebsziel assoziiert, in der das erste Steuermodul mit dem ersten Betriebsziel assoziiert ist. Das Hilfsmodul ist also insbesondere dazu geeignet, durch einen damit adressierbaren Aktor das Stromnetz im Hinblick auf die Erreichung des untergeordneten Betriebsziels zu steuern.

Ein wesentlicher Gedanke der vorliegenden Erfindung liegt also darin, die hierarchische Struktur des Stromnetzes und/oder die hierarchische Struktur der relevanten Zielgrößen zu nutzen, um eine Steuerung des Stromnetzes über wenigstens zwei Ebenen von hierarchisch aufeinander zugreifende Steuermodule zu realisieren. Damit kann der Vorteil erreicht werden, dass ein auf einer höheren Abstraktionsebene spezifiziertes ersten Betriebsziel eine automatisierte Steuerung von hierarchisch untergeordneten Komponenten des Stromnetzes im Hinblick auf die Erreichung des übergeordneten Ziels bewirkt. Hierfür ist lediglich eine Kommunikationsschnittstelle zwischen dem ersten Steuermodul und einem oder mehreren relevanten Hilfsmodulen erforderlich, um einerseits gemessene Zustandsinformation(en) zu empfangen und andererseits das Hilfsmodul unter Vorgabe eines zu erreichenden untergeordneten Betriebsziels aufzurufen. Neben dieser Kommunikationsschnittstelle und der geeigneten Ausgestaltung der jeweiligen Steuermodule sind keine zusätzlichen Hardware-Komponenten erforderlich, so dass der apparative Aufwand der erfindungsgemäßen Lösung vorteilhaft gering ist. Trotzdem wird ermöglicht, dass insbesondere über mehrere Systemebenen des Stromnetzes hinweg eine feingranulare Steuerung von Komponenten im Hinblick auf übergeordnete Betriebsziele des gesamten Stromnetzes umgesetzt wird. Dabei können vor allem auch miteinander konkurrierende Betriebsziele in einem übergeordneten Gesamtziel berücksichtigt werden, beispielsweise als Terme in einer übergeordneten Kostenfunktion, welche insgesamt minimiert werden soll.

Das erfindungsgemäße System dient zur Steuerung eines Stromnetzes, welches hierarchisch in eine Mehrzahl von Systemebenen strukturiert ist. Das System weist eine Mehrzahl von Steuermodulen auf, wobei das jeweilige Steuermodul mit wenigstens einem Betriebsziel assoziiert ist, welches einer ausgewählten Systemebene des Stromnetzes zugeordnet ist und welches einer ausgewählten Abstraktionsebene für Zielvorgaben zugeordnet ist. Wenigstens eines der Steuermodule ist dazu ausgebildet, bei seinem Aufruf die Schritte d1) bis d4) des Verfahrens auszuführen. Zusätzlich kann das System eine Vorrichtung zum Festlegen eines ersten Betriebsziels aufweisen (wobei gleichzeitig ein Auswählen einer Systemebene erfolgt) und eine Vorrichtung zum Bereitstellen einer Topologie des Stromnetzes aufweisen.

Das erfindungsgemäße Computerprogrammprodukt umfasst Befehle, wobei die Befehle bei der Ausführung des Computerprogrammprodukts auf einem Computer diesen dazu veranlassen, das erfindungsgemäße Verfahren auszuführen. Die Vorteile des Systems sowie des Computerprogrammprodukts ergeben sich analog zu den oben beschriebenen Vorteilen des erfindungsgemäßen Verfahrens.

Vorteilhafte Ausgestaltungen und Weiterbildungen der Erfindung gehen aus den von den Ansprüchen 1 abhängigen Ansprüchen sowie der folgenden Beschreibung hervor. Dabei können die beschriebenen Ausgestaltungen des Verfahrens auch bei dem System bzw. dem Computerprogrammprodukt realisiert werden und umgekehrt.

So kann gemäß einer allgemein vorteilhaften Ausführungsform die in Teilschritt d2) von dem Hilfsmodul empfangene Zustandsinformation wenigstens eine untergeordnete Zustandsinformation enthalten, welche das Hilfsmodul in einem zu Teilschritt d2) analogen Teilschritt von einem untergeordneten Hilfsmodul anfordert und empfängt. Hierzu kann das Hilfsmodul in einem zu Teilschritt d1) analogen Teilschritt zumindest ein untergeordnetes Hilfsmodul identifizieren. Durch ein solches kaskadiertes Vorgehen kann eine besonders genaue Zustandsbestimmung in dem hierarchisch strukturierten Stromnetz erfolgen.

Gemäß einer vorteilhaften Weiterbildung kann das Aufrufen des mit dem untergeordneten Betriebsziel assoziierten Hilfsmoduls in Schritt d4) insgesamt analog zum Aufrufen des ersten Steuermoduls erfolgen, so dass dieses Aufrufen insbesondere weitere Teilschritte analog zu den Teilschritten d1) bis d4) bewirkt. Mit anderen Worten kann der Aufruf wenigstens eines Hilfsmoduls die folgenden weiteren Teilschritte zur Folge haben:
- Identifizieren von wenigstens einem untergeordneten Hilfsmodul des Hilfsmoduls, wobei das jeweilige untergeordnete Hilfsmodul einer bezüglich der Systemebene und/oder bezüglich der Abstraktionsebene des Hilfsmoduls weiter untergeordneten hierarchischen Ebene zugeordnet ist,
- Anfordern und Empfangen von wenigstens einer Zustandsinformation von wenigstens einem untergeordneten Hilfsmodul,
- Ermitteln von wenigstens einem weiter untergeordneten Betriebsziel unter Verwendung des untergeordneten Betriebsziels und der von dem wenigstens einen untergeordneten Hilfsmodul empfangenen Zustandsinformation sowie
- Übermitteln des weiter untergeordneten Betriebsziels an ein damit assoziiertes untergeordnetes Hilfsmodul und Aufrufen des untergeordneten Hilfsmoduls.

Bei dieser Ausführungsform findet also ein kaskadierter Aufruf von einer Kette aus wenigstens zwei nacheinandergeschalteten Hilfsmodulen statt. Zusammen mit dem ersten Steuermodul werden also insgesamt Steuermodule aus wenigstens drei verschiedenen Hierarchieebenen aufgerufen, was eine besonders feingranulare Steuerung im Hinblick auf ein übergeordnetes Betriebsziel ermöglicht. Die Kaskadierung kann auch noch wesentlich tiefer sein und z.B. insgesamt einen Aufruf von Steuermodulen aus vier, fünf, sechs oder mehr hierarchischen Ebenen zur Folge haben. Am Ende der kaskadierten Kette steht jedoch jeweils ein Hilfsmodul, dessen Aufruf zwar eine bestimmte Aktion zur Erreichung des zugehörigen Betriebsziels (z.B. eine Veränderung eines Aktors gemäß einem Sollwert), aber keinen Aufruf eines weiteren untergeordneten Steuermoduls zur Folge hat und somit auch keine weitere Zerlegung des zugehörigen Betriebsziels in weitere Teilziele.

Alternativ zu der beschriebenen Ausführungsform mit einem kaskadierten Aufruf von zwei oder mehr nacheinandergeschalteten Hilfsmodulen kann jedoch bereits beim Aufruf des ersten Hilfsmoduls in Schritt d4) nur eine einzelne Aktion auf dessen Hierarchieebene erfolgen, so dass die Kaskadierungstiefe dann auf zwei Hierarchieebenen begrenzt ist. Bei den beschriebenen Hierarchieebenen kann es sich allgemein um Systemebenen und/oder Abstraktionsebenen handeln.

Allgemein vorteilhaft und unabhängig von der Tiefe der Kaskadierung kann beim Empfangen der Zustandsinformation gemäß Schritt d2) und beim Aufrufen gemäß Schritt d4) dasselbe Hilfsmodul zum Einsatz kommen. Dieses Hilfsmodul hat dann zweckmäßig Zugriff sowohl auf einen Sensor als auch auf einen Aktor. Dies betrifft zunächst das Hilfsmodul in der ersten Kaskadierungsebene, welches unmittelbar von dem ersten Steuermodul aufgerufen wird. In analoger Weise können aber auch bei den zu d2) und d4) analogen Teilschritten in den unteren Kaskadierungsebenen jeweils dieselben untergeordneten Hilfsmodule verwendet werden. Wenn in Schritt d1) und in den dazu analogen Schritten jeweils mehrere Hilfsmodule identifiziert werden, dann wird bei dieser Ausführungsform zumindest eines der identifizierten Hilfsmodule sowohl beim Anfordern der Zustandsinformation als auch beim Aufruf zur Umsetzung des untergeordneten Betriebsziels adressiert. Besonders vorteilhaft kann jedes aus der Mehrzahl der identifizierten Hilfsmodule für beide Aufgaben (Zustandsübermittlung und Betriebsziel-Umsetzung) verwendet werden. Alternativ ist es aber auch grundsätzlich möglich, dass die beiden unterschiedlichen Aufgaben (ganz oder teilweise) von unterschiedlichen Hilfsmodulen durchgeführt werden. Allgemein hat jeweils das in Teilschritt d2) adressierte Hilfsmodul zweckmäßig Zugriff auf einen Sensor und das jeweils in Teilschritt d4) adressierte Hilfsmodul hat zweckmäßig Zugriff auf einen Aktor.

Allgemein und unabhängig von der genauen Anzahl und Verkettung der einzelnen Steuermodule können die bei dem Verfahren insgesamt aufgerufenen Steuermodule (inklusive aller aufgerufenen Hilfsmodule) wenigstens drei unterschiedlichen hierarchischen Ebenen zugeordnet sein. Dies kann insbesondere eine zweistufige Kaskadierung über drei hierarchische Ebenen sein, wie oben bereits beschrieben. Alternativ können vom ersten Steuermodul aber auch mehrere Hilfsmodule aufgerufen werden, welche verschiedenen untergeordneten hierarchischen Ebenen zugeordnet sind, so dass sich insgesamt eine hierarchische Tiefe von drei oder mehr hierarchischen Ebenen ergibt. In jedem Fall wird durch die hierarchische Tiefe von wenigstens drei Ebenen eine besonders effiziente feingranulare Steuerung im Hinblick auf ein übergeordnetes Ziel erreicht. Allgemein können auch Steuermodule aus vier, fünf, sechs oder mehr hierarchischen Ebenen aufgerufen werden.

Besonders vorteilhaft ist es im Zusammenhang mit dieser Ausführungsform, wenn die insgesamt aufgerufenen Steuermodule wenigstens drei unterschiedlichen Systemebenen des Stromnetzes zugeordnet sind, besonders vorteilhaft sogar über vier, fünf, sechs oder mehr Systemebenen. So kann eine besonders feingranulare Steuerung über die hierarchische Struktur des Stromnetzes hinweg erfolgen. Besonders bevorzugt ist es, wenn die insgesamt aufgerufenen Steuermodule über wenigstens zwei Netzebenen verteilt sind, ganz besonders vorteilhaft sogar über drei oder mehr unterschiedliche Netzebenen. So kann die Steuerung sich entsprechend über verschiedene Spannungsbereiche des gesamten Stromnetzes erstrecken, was sich vorteilhaft auf die Erreichung sehr abstrakter, übergeordneter Ziele auswirkt, die von den Zuständen mehrerer Netzebenen beeinflusst werden.

Allgemein besonders bevorzugt ist es, wenn die insgesamt aufgerufenen Steuermodule wenigstens zwei unterschiedlichen Systemebenen und wenigstens zwei unterschiedlichen Abstraktionsebenen zugeordnet sind. Mit anderen Worten erstreckt sich dann die hierarchische Tiefe der Steuerung nicht nur über die hierarchische Struktur des Stromnetzes sondern auch über die hierarchische Struktur bei der Vorgabe der Betriebsziele. Durch eine solche Zweidimensionalität in der hierarchischen Struktur der Steuerung kann effizient eine feingranulare Steuerung im Hinblick auf besonders abstrakte Gesamtziele ermöglicht werden. Die zweidimensionale hierarchische Tiefe muss dabei jedoch nicht zwingend von demselben Hilfsmodul erreicht werden: Insbesondere beim Aufruf von einer Mehrzahl von Hilfsmodulen kann ein Teil dieser Hilfsmodule dem ersten Steuermodul bezüglich der Systemebene untergeordnet sein und ein anderer Teil kann bezüglich der Abstraktionsebene des zugehörigen Betriebsziels untergeordnet sein, wobei jeweils auch eine Schnittmenge möglich ist.

Soweit die einzelnen Steuermodule mit unterschiedlichen Abstraktionsebenen assoziiert sind, können die unterschiedlichen Abstraktionsebenen wenigstens zwei der folgenden Abstraktionsebenen für Zielvorgaben umfassen:
- die Angabe eines übergeordneten Betriebsziels für das Stromnetz, wobei das übergeordnete Betriebsziel aus mehreren Teil-Betriebszielen zusammengesetzt ist,
- die Angabe eines Teil-Betriebsziels für das Stromnetz, insbesondere eines Teil-Betriebsziels zur Energieeffizienz, zur Wirtschaftlichkeit und/oder zur Treibhausgasemission,
- die Angabe eines Ziels oder Grenzwertes für eine aus mehreren Teil-Messgrößen zusammengesetzte Messgröße, insbesondere eine zusammengesetzte Messgröße zur Netzstabilität, zu Netzverlusten oder zur Einspeisung von erneuerbar erzeugter elektrischer Energie,
- die Angabe eines Ziels oder Grenzwertes für eine einzeln messbaren Teil-Messgröße, insbesondere eine Leistung, eine Spannung oder eine Stromstärke,
- die Angabe einer Priorisierung verschiedener topologischer Zustände des Stromnetzes.

In dieser Liste sind die höheren Abstraktionsebenen jeweils zuerst genannt. Bei den ersten vier Abstraktionsebenen handelt es sich um Beispiele, wie ein Betriebsziel einer höheren Abstraktionsebene aus Teilzielen einer untergeordneten Abstraktionsebene zusammengesetzt sein kann. In ähnlicher Weise kann eine Vielzahl weiterer Abstraktionsebenen für weitere hier nicht genannte (z.B. sekundäre) Ziele des Stromnetzes abgeleitet werden. Bei den genannten "Zielen" kann es sich allgemein jeweils z.B. um einen bestimmten zu erreichenden Zielwert handeln (z.B. einen Sollwert) oder um einen Zielkorridor (z.B. ein einzuhaltendes Spannungsband) oder um eine andere Art von festem Grenzwert (Minimalwert oder Maximalwert) oder auch um eine Optimierungsrichtung (also eine Angabe, ob die jeweilige Größe zu minimieren oder zu maximieren ist). Eine Priorisierung verschiedener topologischer Zustände des Stromnetzes kann dann relevant sein, wenn ein Aktor die Netztopologie ändern kann und z.B. bestimmte Betriebsmittel bei der engen Anbindung an einen Transformator gegenüber anderen Betriebsmitteln bevorzugt werden sollen. Auch eine solche Priorisierung kann z.B. als Teilziel in ein übergeordnetes Betriebsziel eingehen.

In einer vorteilhaften Ausgestaltung der Erfindung ist wenigstens eines der insgesamt aufgerufenen Hilfsmodule (inklusive aller untergeordneten Hilfsmodule) einem Verteilnetz des Stromnetzes zugeordnet. Dies steht im Gegensatz zum übergeordneten Übertragungsnetz, und es kann sich allgemein um ein Hochspannungs-, Mittelspannungs- oder Niederspannungs-Verteilnetz handeln. Besonders bevorzugt handelt es sich um ein Mittelspannungs- oder Niederspannungs-Verteilnetz, da bei dieser Ausführung eine feingranulare Steuerung der im Rahmen der Energiewende hinzutretenden dezentralen Verbraucher und/oder Erzeuger im Hinblick auf die übergeordneten Betriebsziele ermöglicht wird.

Gemäß einer vorteilhaften Weiterbildung des Verfahrensschritts c) erfolgt in diesem Schritt eine automatisierte Bestimmung der Topologie des Stromnetzes. Mit anderen Worten kann die Bestimmung der Topologie Teil des Verfahrens sein und insbesondere unter Beteiligung der beschriebenen Steuermodule (also des ersten Steuermoduls und optional weiterer Hilfsmodule) erfolgen. Dies kann beispielsweise nach dem in der europäischen Patentanmeldung EP 4 075 622 A1 beschriebenen Verfahren erfolgen. Es kommen jedoch auch andere in der Fachwelt bekannte Verfahren zur Topologieermittlung in Frage. Alternativ zur automatisierten Bestimmung kann die Topologie des Netzes grundsätzlich auch schon in der erforderlichen Genauigkeit bekannt sein.

Gemäß einer allgemein vorteilhaften Ausführung der Erfindung kann in Schritt d1) eine Mehrzahl von Hilfsmodulen identifiziert werden, von welchen in Schritt d2) Zustandsdaten empfangen werden und/oder welche in Schritt d4) aufgerufen werden. So können beispielsweise bei der Ermittlung der Zustandsdaten mehrere Hilfsmodule beteiligt sein. Alternativ oder zusätzlich können in Schritt d3) mehrere untergeordnete Betriebsziele ermittelt werden (z.B. durch Disaggregieren des ersten Betriebsziels) und können in Schritt d4) mehrere Hilfsmodule unter Übermittlung des jeweils zugehörigen untergeordneten Betriebsziels aufgerufen werden. Bei einer solchen Disaggregation kann eine eineindeutige Zuordnung zwischen untergeordneten Betriebszielen und Hilfsmodulen vorgenommen werden, so dass jedes aufgerufene Hilfsmodul für genau ein untergeordnetes Betriebsziel verantwortlich ist. Alternativ können dem untergeordneten Betriebsziel jedoch auch mehrere Hilfsmodule einer Hierarchieebene zugeordnet sein, was entsprechend zu einem Aufruf mehrere Hilfsmodule derselben Hierarchieebene führt. In ähnlicher Weise kann auch bei der Variante mit einem kaskadierten Aufruf von mehreren Ebenen von Hilfsmodulen jeweils in den unteren Ebenen der Kaskade ein Aufruf von mehreren untergeordneten Hilfsmodulen durch das Hilfsmodul aus der Hierarchieebene darüber erfolgen.

Gemäß einer vorteilhaften Weiterbildung der Erfindung kann in Schritt d2) zusätzlich zu der wenigstens einen Zustandsinformation wenigstens eine Information zu einem Stellbereich und/ oder einer Sensitivität angefordert und empfangen werden. Unter einer Sensitivität wird hier allgemein die Abhängigkeit des jeweils betrachteten Betriebsziels von einem oder mehreren Aktoren verstanden. Wenn zusätzlich zu den über den jeweiligen Sensor gemessenen Zustandsdaten auch solche weiteren Informationen übermittelt werden, kann eine noch genauere Charakterisierung des Stromnetzes erfolgen, und die zusätzliche Information über Stellbereiche und Sensitivitäten kann genutzt werden, um in Schritt d3) eine genauere Bestimmung vorteilhafter untergeordneter Betriebsziele vorzunehmen. Insbesondere wenn in Schritt d3) ein Optimierungsproblem gelöst wird, können diese zusätzlichen Informationen als Randbedingungen bei der Optimierung verwendet werden.

So kann gemäß einer allgemein vorteilhaften Ausführungsform das Ermitteln des wenigstens einen untergeordneten Betriebsziels durch Lösen eines Optimierungsproblems erfolgen. Dieses Lösen kann insbesondere automatisiert und computergestützt erfolgen. Entsprechende Lösungsverfahren sind aus dem Stand der Technik hinreichend bekannt. Durch Lösen eines Optimierungsverfahrens können ein oder mehrere untergeordnete Betriebsziele ermittelt werden, deren Erreichen (durch entsprechenden Aufruf der Hilfsmodule) zu einer Optimierung im Hinblick auf das übergeordnete erste Betriebsziel führt. In analoger Weise kann auch bei dem Aufruf der jeweiligen Hilfsmodule in dem zu Schritt d3) entsprechenden Schritt das Lösen eines entsprechend untergeordneten Optimierungsproblems erfolgen. So ergibt sich dann insgesamt eine kaskadierte Optimierung über mehrere Hierarchieebenen.

Bei einer besonders vorteilhaften Variante können in Teilschritt d3) mehrere untergeordnete Betriebsziele ermittelt werden, wobei Teilschritt d4) dann für jedes dieser untergeordneten Betriebsziele ausgeführt wird. Mit anderen Worten wird für jedes untergeordnete Betriebsziel (wenigstens) ein damit assoziiertes Hilfsmodul aufgerufen. Auch diese Ausführungsform kann in entsprechender Weise für eine tiefere Stufe des kaskadierten Verfahrens zum Tragen kommen. Besonders vorteilhaft ist diese Ausführungsform in Kombination mit dem Lösen eines Optimierungsproblems innerhalb von Schritt d3). So kann das Lösen des Optimierungsproblems zu einer Zerlegung des ersten Betriebsziels in mehrere geeignete untergeordnete Betriebsziele führen. Dies kann insbesondere durch grundsätzlich bekannte Verfahren zur Dekomposition von Optimierungsproblemen erfolgen. Ein Beispiel für ein solches Dekompositionsverfahren ist die duale Dekomposition.

Nachfolgend wird die Erfindung anhand einiger bevorzugter Ausführungsbeispiele unter Bezugnahme auf die angehängten Zeichnungen beschrieben, in denen
- Figur 1: eine schematische Darstellung eines hierarchisch strukturierten Stromnetzes zeigt,
- Figur 2: ein Blockschema eines kaskadierten Aufrufs mehrerer Steuermodule zeigt,
- Figur 3: eine schematische Darstellung ausgewählter Verfahrensschritte zeigt und
- Figur 4: ein weiteres Blockschema mit Steuermodulen in mehreren Hierarchieebenen zeigt.

In den Figuren sind gleiche oder funktionsgleiche Elemente mit gleichen Bezugszeichen versehen.

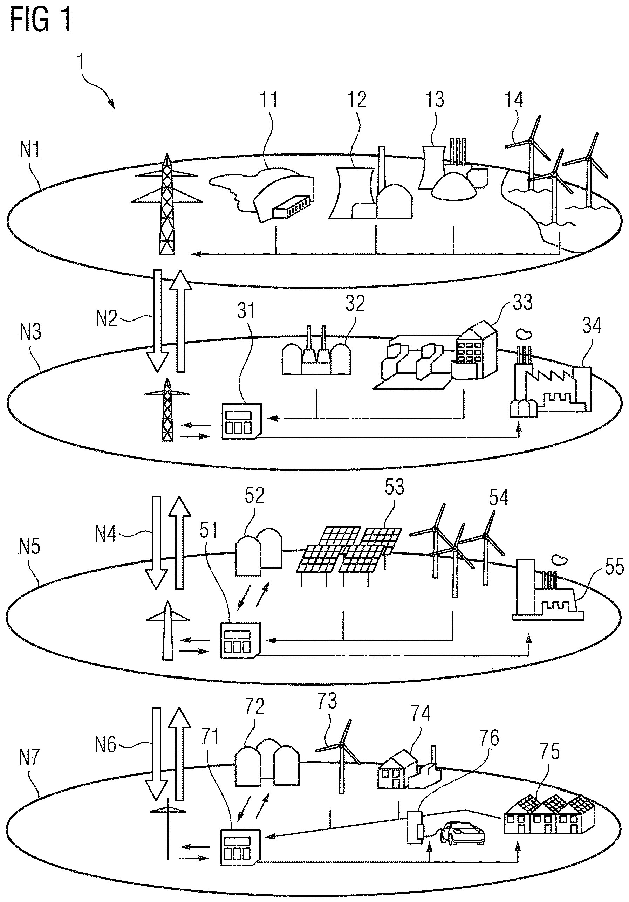

In Figur 1 ist ein schematisches Stromnetz 1 mit einer hierarchischen Anordnung aus mehreren Netzebenen NE1 bis NE7 gezeigt. Die Darstellung gibt grob die Struktur des aktuellen deutschen Stromnetzes wieder, und in einem solchen Stromnetz 1 kann das erfindungsgemäße Verfahren eingesetzt werden. Entsprechend können auch das erfindungsgemäße System und das erfindungsgemäße Computerprogrammprodukt in ein solches Stromnetz 1 integriert werden. Beim gezeigten Beispiel werden die Netzebenen N1, N3, N5 und N7 bei unterschiedlichen Wechselspannungs-Niveaus betrieben. Die hierarchisch oberste Netzebene N1 ist ein Höchstspannungs-Übertragungsnetz mit einer Betriebsspannung von beispielsweise 220 kV oder 380 kV. Diese oberste Netzebene N1 umfasst z.B. Wasserkraftwerke 11, Kernkraftwerke 12, Kohlekraftwerke 13 und Hochseewindparks 14 als Stromerzeuger, wobei das Wort "Erzeugung" in diesem Zusammenhang für die Umwandlung von anderen Energieformen in elektrische Energie verwendet wird. Die Pfeile in Figur 1 geben allgemein die Richtung des elektrischen Energieflusses an. Die hierarchisch darunterliegende Netzebene N3 umfasst ein oder mehrere überregionale Hochspannungs-Verteilnetze mit einer Netzspannung im Bereich zwischen 60 kV und 150 kV. Hier ist eine überregionale Ausgleichseinrichtung 31 angeordnet sowie z.B. Gaskraftwerke 32, Wasserkraftwerke 33 als Stromerzeuger sowie großindustrielle Einrichtungen 34 als Verbraucher. Die hierarchisch darunterliegende Netzebene N5 umfasst ein oder mehrere regionale Mittelspannungs-Verteilnetze mit einer Netzspannung z.B. in einem Bereich zwischen 1 kV und 50 kV. Hier ist eine regionale Ausgleichseinrichtung 51 angeordnet sowie z.B. regionale elektrische Speicher 52, Solarparks 53 und Windparks 54 als Erzeuger und industrielle Einrichtungen 55 als Verbraucher. Die hierarchisch darunterliegende Netzebene N7 umfasst ein oder mehrere lokale Niederspannungs-Verteilnetze (z.B. Ortsnetze) z.B. mit einer Netzspannung von 400 V beziehungsweise 230 V. Hier ist eine lokale Ausgleichseinrichtung 71 angeordnet sowie lokale Speicher 72, Windanlagen 72 und Blockheizkraftwerke 74 als Erzeuger, Haushalte 75 und andere Einrichtungen, die sowohl als Verbraucher als auch als Erzeuger auftreten können (engl. "Prosumer") sowie z.B. Ladestationen 76 für Elektrofahrzeuge als weitere Verbraucher. Vor allem in solchen Niederspannungs-Netzen sowie in den Mittelspannungs-Netzen treten im Rahmen der Energiewende Erzeuger, Verbraucher und Prosumer mit zeitlich stark schwankendem Verbrauch bzw. schwankender Einspeisung hinzu, so dass gerade in diesen unteren Netzebenen N7 und N5 das erfindungsgemäße Verfahren besonders wirksam zum Tragen kommt. In den geradzahligen Netzebenen N2, N4 und N6, die hierarchisch zwischen den beschriebenen ungeradzahligen Netzebenen N1, N3, N5 und N7 liegen, sind jeweils Transformatoren angeordnet, um eine Transformierung zwischen den unterschiedlichen Netzspannungen zu bewirken.

Die im Zusammenhang mit der Erfindung beschriebenen hierarchischen Systemebenen können dabei von den in Figur 1 gezeigten Netzebenen N1 bis N7 abgeleitet sein. Die Systemebenen sind jedoch typischerweise nicht mit den Netzebenen identisch, da meist auch innerhalb der einzelnen Netzebenen eine hierarchische Unterstruktur vorliegt, so dass diese Netzebenen dann in weitere Systemebenen untergliedert sind. So kann beispielsweise ein Mittelspannungs- oder Niederspannungsnetz in einzelne unabhängige Netzstränge strukturiert sein, und die einzelnen Netzstränge können wiederum in einzelne Zweige untergliedert sein. Die Anzahl der Systemebenen ist in einem solchen Fall höher als die Anzahl der Netzebenen. Die Systemebenen bilden dann hierarchische Teilebenen der zugehörigen Netzebenen, wobei eine Systemebene einer tieferen Netzebene immer hierarchisch unterhalb von allen Systemebenen einer höheren Netzebene liegt.

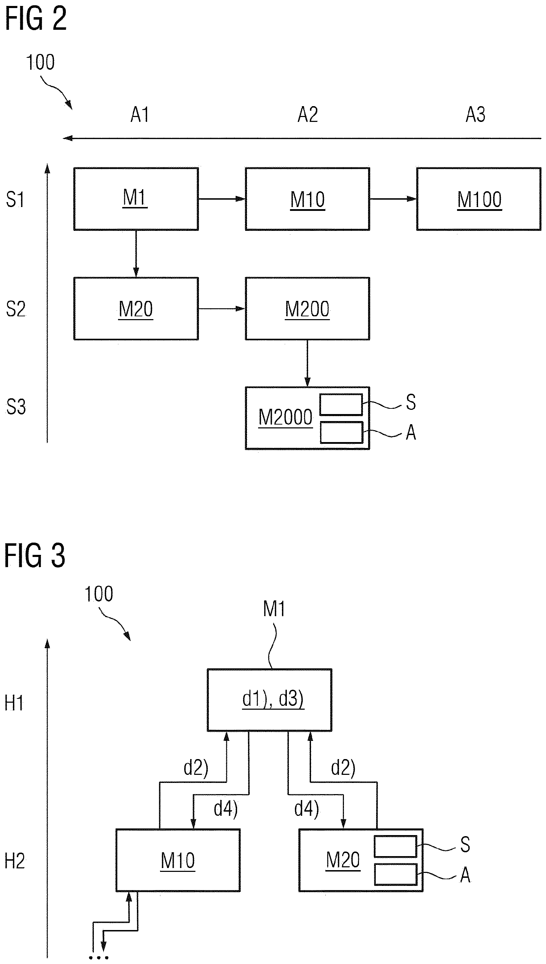

Figur 2 zeigt ein Blockschema eines kaskadierten Aufrufs mehrerer Steuermodule M1 bis M2000 nach einem ersten Ausführungsbeispiel der Erfindung. Diese Steuermodule sind Teil eines erfindungsgemäßen Steuerungssystems 100 und können in ein Stromnetz entsprechend der Figur 1 integriert sein, wobei z.B. wenigstens ein Teil der Steuermodule innerhalb der unteren Netzebenen N5 und N7 angeordnet sein kann. Die einzelnen Steuermodule sind hierarchisch organisiert, wobei eine Zuordnung zu zwei verschiedenen hierarchischen Dimensionen erfolgt. So ist jedes der Steuermodule einer Systemebene zugeordnet, wobei hier beispielhaft nur drei Systemebenen S1 bis S3 gezeigt sind. Die Systemebenen können sich über unterschiedliche Netzebenen des Stromnetzes erstrecken: So können z.B. die unteren Systemebenen S2 und S3 im Niederspannungs-Verteilnetz N7 liegen und die obere Systemebene S1 kann im Mittelspannungs-Verteilnetz N5 liegen. Dies ist jedoch nur ein äußerst schematisches Beispiel, und sowohl die Zahl der verwendeten Steuermodule als auch die Zahl der zugehörigen Systemebenen kann in Wirklichkeit wesentlich höher sein.

Außerdem ist jedem der Steuermodule eine Abstraktionsebene für ein mit dem Modul assoziiertes Betriebsziel zugeordnet, wobei auch hier beispielshaft nur drei Abstraktionsebenen A1 bis A3 gezeigt sind. Die dargestellten Pfeile zeigen dabei jeweils in die Richtung der höheren hierarchischen Ebenen. Die Zuordnung der Steuermodule M1 bis M2000 zu den jeweiligen Abstraktionsebenen A1 bis A3 ergibt sich daraus, dass das jeweilige Steuermodul zur Steuerung im Hinblick auf ein bestimmtes Betriebsziel ausgelegt ist. Die einzelnen Betriebsziele können dabei auf unterschiedlichen Abstraktionsebenen vorgegeben sein, wobei diese Abstraktionsebenen auch als Aggregationsebenen bezeichnet werden können. So ist insbesondere eine Zielvorgabe auf einer höheren Abstraktionsebene typischerweise aus mehreren Teil-Betriebszielen einer niedrigeren Abstraktionsebene zusammengesetzt. Beispielsweise ist ein Ziel für die Gesamt-Performance des Stromnetzes (oder eines Teils davon), welches aus mehreren Teilzielen zusammengesetzt ist, einer höheren Abstraktionsebene zuzuordnen als diese Teilziele. Solche Teilziele können z.B. für Messgrößen zur Netz-Stabilität, zur Wirtschaftlichkeit des Betriebs und zur Verringerung des CO₂-Ausstoßes durch Einspeisung erneuerbarer Energien zusammengesetzt sein. Typischerweise werden zumindest manche der aufgestellten Teilziele miteinander konkurrieren. In ähnlicher Weise ergeben sich auch unterschiedliche Abstraktionsebenen für aggregierte physikalische Größen, die sich z.B. aus einer Summe von untereinander ähnlichen Termen ergeben wie beispielsweise die Summe von Verlustleistungen in einzelnen Netzzweigen.

Von den verschiedenen in Figur 2 dargestellten Steuermodulen ist das insgesamt (bezüglich beider Dimensionen) hierarchisch höchste Modul das Steuermodul M1, welches hier auch als erstes Steuermodul bezeichnet wird. Dieses erste Steuermodul M1 wird im Rahmen des erfindungsgemäßen Verfahrens im Verfahrensschritt d) aufgerufen. Typischerweise werden diesem Aufruf die Verfahrensschritte a) bis c) vorangehen, wobei in Schritt a) die Systemebene dieses ersten Moduls ausgewählt wird, in Schritt b) das durch dieses erste Modul zu erreichende erste Betriebsziel festgelegt wird und in Schritt c) die Netz-Topologie bereitgestellt wird. Diese Informationen stehen also beim Aufruf des ersten Moduls M1 zur Verfügung, wobei durch die Kenntnis der ausgewählten Systemebene und des ersten Betriebsziels die Auswahl eines bestimmten Moduls als aufzurufendes erstes Steuermodul erst ermöglicht wird.

Der Aufruf des ersten Steuermoduls M1 dient dazu, das festgelegte erste Betriebsziel möglichst gut zu erreichen, wobei im Rahmen der Erfindung allgemein wenigstens ein weiteres Hilfs-Steuermodul (kurz: Hilfsmodul) verwendet wird. Typischerweise und besonders vorteilhaft kommen insgesamt mehrere Hilfsmodule zum Einsatz, in Figur 2 sind dies die Hilfsmodule M10, M20, M100, M200 und M2000. Alle diese Hilfsmodule sind dem ersten Steuermodul M1 hierarchisch untergeordnet. Sie liegen also jeweils entweder bezüglich der Systemebene oder bezüglich des Abstraktionsebene des mit dem Modul assoziierten Betriebsziels oder sogar bezüglich beider Dimensionen auf einer niedrigeren Hierarchiestufe. Im gezeigten Beispiel werden im Verfahrensschritt d1) die beiden Steuermodule M10 und M20 als (direkte) Hilfsmodule des ersten Steuermoduls M1 identifiziert und im folgenden von diesem aufgerufen, was durch die entsprechenden Pfeile symbolisiert ist. In einem insgesamt kaskadierten Ablauf rufen diese beiden Hilfsmodule jeweils noch ein weiteres untergeordnetes Hilfsmodul auf, nämlich M100 als untergeordnetes Hilfsmodul zu M10 und M200 als untergeordnetes Hilfsmodul zu M20. Typischerweise kann das erste Steuermodul M1 aber auch noch viel mehr Hilfsmodule direkt aufrufen und jedes Hilfsmodul kann viel mehr untergeordnete Hilfsmoduls aufrufen, was hier nur der Übersichtlichkeit halber nicht dargestellt ist. Rein exemplarisch ruft das untergeordnete Hilfsmodul M200 hier noch ein weiter untergeordnetes Hilfsmodul M2000 auf. Auch hier kann die Anzahl der Module auf dieser untergeordneten Ebene noch wesentlich höher sein, und die Tiefe der Kaskadierung kann insgesamt noch wesentlich ausgeprägter sein als die hier dargestellte Kette von Modul-Aufrufen über insgesamt vier Hierarchieebenen. Figur 2 soll also nur grob veranschaulichen, wie ein kaskadierter Aufruf von mehreren Hilfsmodulen über mehrere hierarchische Ebenen erfolgen kann, wobei sich die hierarchische Einordnung aus den zwei beschriebenen Dimensionen ergibt. Um den Netzzustand zu erfassen und das erste Betriebsziel (und die mit den Hilfsmodulen assoziierten untergeordneten Betriebsziele) zu erreichen, können beispielsweise die hierarchisch weiter untenstehenden Module M100, M200, M2000 jeweils einen Aktor und/oder einen Sensor umfassen oder zumindest einen Zugriff auf einen Aktor und/oder einen Sensor aufweisen. Nur beispielshaft ist dies für das hierarchisch unterste Modul 2000 durch den integrierten Aktor A und den integrierten Sensor S angedeutet.

Bei der in Figur 2 dargestellten zweidimensionalen Hierarchie ist zu beachten, dass die beiden dargestellten Dimensionen der Systemebene und der Abstraktionsebene nicht völlig unabhängig voneinander sind. Entsprechend muss die sich ergebende Matrix auch nicht vollständig besetzt sein, weil z.B. die Angabe eines Betriebsziels auf einer sehr hohen Abstraktionsebene für eine hierarchisch sehr tiefe Systemebene gar nicht relevant ist. Umgekehrt können manche Positionen dieser Matrix auch mehrfach besetzt sein, wenn z.B. ein Steuermodul mehrere Hilfsmodule in derselben System- und Abstraktionsebene aufruft. Vor allem bei einer entsprechend tiefen Kaskadierung kann es dann für manche Positionen in der gezeigten zweidimensionalen Matrix zu einer vielfachen Besetzung mit aufgerufenen Hilfsmodulen kommen.

Figur 3 zeigt ein weiteres schematisches Blockdiagram, in welchem die einzelnen Verfahrensschritte beim Aufruf eines Hilfsmoduls M10 bzw. M20 durch ein übergeordnetes erstes Steuermodul M1 dargestellt sind. Nur der Übersichtlichkeit halber sind hier die beiden hierarchischen Dimensionen der Figur 2 zu einer einzigen Hierarchiedimension zusammengefasst. Die beiden Hilfsmodule M10 und M20 sind also einer untergeordneten Hierarchieebene H2 zugeordnet im Verhältnis zur übergeordneten Hierarchieebene H1 des ersten Steuermoduls M1. Dies gilt unabhängig davon, ob die Hilfsmodule diesem ersten Steuermodul M1 bezüglich der Systemebene oder bezüglich der Abstraktionsstufe des Betriebsziels untergeordnet sind oder beides. Der Aufruf des hierarchisch übergeordneten ersten Steuermoduls M1 entspricht dem Schritt d) des Verfahrens mit den Teilschritten d1) bis d4). Beim Teilschritt d1) werden die vom ersten Steuermodul M1 heranzuziehenden hierarchisch untergeordneten Hilfsmodule M10 und M20 identifiziert. Dies kann beispielsweise automatisiert innerhalb des ersten Steuermoduls M1 erfolgen, wobei die in Schritt c) bereitgestellte topologische Information verwendet wird. Beim Teilschritt d2) fordert das erste Steuermodul M1 beim jeweiligen Hilfsmodul M10 bzw. M20 wenigstens eine Zustandsinformation an und empfängt diese Zustandsinformation. Dies ist schematisch durch die nach oben gerichteten Pfeile symbolisiert. Beim Teilschritt d3) wird von dem ersten Steuermodul M1 unter Verwendung dieser erhaltenen Zustandsinformationen wenigstens ein untergeordnetes Betriebsziel ermittelt. Im gezeigten Beispiel werden Zustandsinformationen von beiden Hilfsmodulen M10 und M20 erhalten. Diese Zustandsinformationen können z.B. bei M20 innerhalb des Hilfsmoduls durch einen zugehörigen Sensor S ermittelt werden, oder sie können in einem kaskadierten Aufruf von ein oder mehreren weiter untergeordneten Hilfsmodulen erhalten werden, wie dies durch den von unten kommenden Pfeil beim Hilfsmodul M10 angedeutet ist.

Außerdem wird für jedes verwendete Hilfsmodul ein zugehöriges untergeordnetes Betriebsziel ermittelt, welches im Teilschritt d4) an das jeweilige Hilfsmodul M10 bzw. M20 zusammen mit dem Aufruf des Hilfsmoduls übergeben wird. Die Ermittlung der untergeordneten Betriebsziele kann durch Zerlegung des übergeordneten ersten Betriebsziels im Rahmen eines Optimierungsverfahrens erfolgen, z.B. durch duale Dekomposition. Der Aufruf der Hilfsmodule in Schritt d4) kann entweder zu einer direkten Aktion des jeweiligen Hilfsmoduls über seinen zugehörigen Aktor A führen, um direkt zur Erreichung des untergeordneten Betriebsziels beizutragen (wie beim Hilfsmodul M20 gezeigt). Alternativ kann er zu einem kaskadierten Aufruf ein oder mehrerer weiterer untergeordneter Hilfsmodule führen (wie beim Hilfsmodul M10 durch den nach unten gehenden Pfeil angedeutet). Wenn ein solcher kaskadierter Aufruf von weiteren untergeordneten Hilfsmodulen in noch tieferen Hierarchieebenen stattfindet, dann kann der Aufruf des jeweils untergeordneten Hilfsmoduls analog zum Aufruf der Hilfsmodule M10, M20 in der ersten untergeordneten Hierarchiestufe H2 erfolgen, also jeweils mit Teilschritten analog zu den Teilschritten d1) bis d4) .

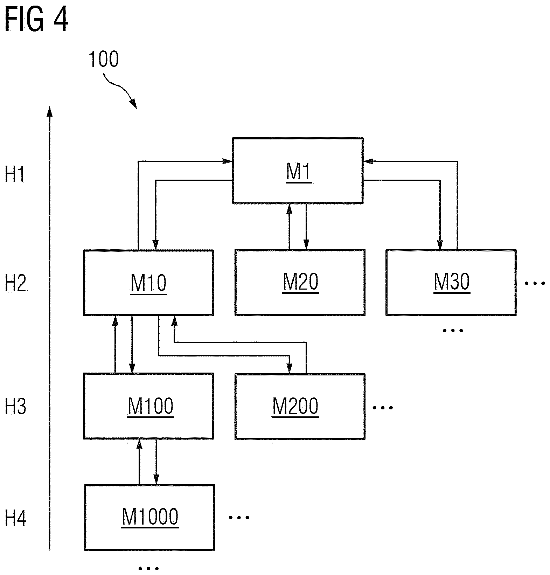

In Figur 4 ist ein weiteres Blockschema mit mehreren Steuermodulen M1 bis M1000 des Steuerungssystems 100 in mehreren Hierarchieebenen H1 bis H4 gezeigt. Es handelt sich hier also um einen kaskadierten Aufruf mit drei Kaskadierungsstufen. Wie durch die Punkte angedeutet, können in jeder der untergeordneten Hierarchieebenen H2 bis H4 auch noch weitere Hilfsmodule außer den gezeigten aufgerufen werden. Gemäß einem konkreten Ausführungsbeispiel des Verfahrens kann die in Schritt a) ausgewählte Systemebene die Ebene eines einzelnen Netzstrangs innerhalb von Netzebene N7 sein. Für diese Systemebene kann ein Nutzer in Schritt b) das erste Betriebsziel festlegen, dass die Abregelung der Einspeisung von erneuerbaren Energien minimiert werden soll, bei gleichzeitiger Minimierung von Grenzwert-Verletzungen. Die vorgegebenen Grenzwerte können z.B. Grenzwerte für Ströme, Leistungen oder Spannungsbänder sein. In Schritt c) kann die Topologie des Stromnetzes bereitgestellt werden, z.B. wird diese Information in der benötigten Detailtiefe aus einer Datenbank ausgelesen oder automatisiert ermittelt. Z.B. kann hier die Anordnung der einzelnen Netzbetriebsmittel innerhalb des relevanten Netzstrangs in Form eines mathematischen Graphen mit Knoten und Kanten bereitgestellt werden. In Schritt d) wird schließlich das in der Figur 4 dargestellte erste Steuermodul M1 aufgerufen, welches in dem relevanten Netzstrang der Netzebene N7 angeordnet ist und für eine Steuerung im Hinblick auf die Erreichung des oben angegebenen ersten Betriebsziels ausgelegt ist. Dieser Aufruf führt zum Teilschritt d1), bei welchem das erste Steuermodul M1 seine direkten Hilfsmodule M10, M20 und M30 identifiziert. Die einzelnen Hilfsmodule können in hierarchisch untergeordneten Systemebenen angeordnet sein, also z.B. in Teilzweigen des betroffenen Netzstrangs. Alternativ oder zusätzlich können sie jeweils mit Betriebszielen auf einer tieferen Abstraktionsebene verknüpft sein, beispielsweise mit Teilzielen für die Minimierung der Verletzung von Stromgrenzen, von Leistungsgrenzen und von Spannungsbändern (entweder für den gesamten Netzstrang oder bereits untergliedert für einzelne Teilzweige). Zumindest von einem Teil der identifizierten Hilfsmodule werden in Teilschritt d2) Zustandsinformationen angefordert und empfangen. Dies können z.B. Echtzeitmessungen von Spannungen, Leistungen und Strömen im betroffenen Netzstrang sein - also Messungen auf einer niedrigeren Abstraktionsebene als die Vorgabe des (mittelbar oder unmittelbar) übergeordneten Ziels "Grenzwert-verletzungen minimieren". Dabei können z.B. Spannungsmessungen an einer sekundärseitigen Sammelschiene vorgenommen werden sowie phasenspezifische Wirk- und/oder Blindleistungen gemessen werden und Effektivwerte der Spannungen an einzelnen Lasten gemessen werden. Zusätzlich zu solchen Echtzeitmessungen können auch Zählerwerte von intelligenten Messsystemen (Smart Meter) für die Engpasserkennung herangezogen werden. Solche Zählerwerte sind in der Regel aggregiert für Viertelstundenintervalle im vergangenen 24-Stunden-Zeitraum verfügbar und können z.B. von einem Hilfsmodul M1000 auf einer niedrigen Systemebene (z.B. im Bereich eines einzelnen Netzbetriebsmittels) bereitgestellt werden. Neben den beschriebenen Messwerten können auch Informationen zu Stellbereichen und/oder Sensitivitäten von den Hilfsmodulen M10 bis M1000 erhalten werden. Für einen Teil der Zustandsinformationen greifen die direkt aufgerufenen Hilfsmodule (hier z.B. M10) auf untergeordnete Hilfsmodule M100 und M200 zurück. So kann z.B. ein Steuerungsmodul zum Lastmanagement einer einzelnen Last Messdaten auf einer niedrigeren Abstraktionsebene anfordern, also einzelne physikalische Messwerte, die insgesamt für das Lastmanagement relevant sind. Bei der Übermittlung der Zustandsdaten an die nächsthöhere Ebene werden die untergeordneten Zustandsdaten ggf. zu relevanten übergeordneten Werten aggregiert. So kann insgesamt auf der Ebene des ersten Steuermoduls M1 ein Gesamtbild des Systemzustandes und ggf. (über die Sensitivitäten) der relevanten Einflüsse der verfügbaren Aktoren auf das vorgegebene erste Betriebsziel zur Verfügung gestellt werden. Im ersten Steuermodul kann diese Zustandsinformation mit den tolerierbaren Grenzwertverletzungen abgeglichen werden (also z.B. harten und weicheren Randbedingungen für die einzelnen Arten von Grenzwertverletzungen, je nachdem ob sie vollständig verboten sind oder nur möglichst minimiert werden sollen). Mit dieser Summe an zur Verfügung stehenden Informationen wird im Teilschritt d3) im ersten Steuermodul ein automatisiertes Lösen eines zugehörigen mathematischen Optimierungsproblems durchgeführt, wobei die für die Erreichung des ersten Betriebsziels vorteilhaften Betriebsparameter ermittelt werden. Im Ergebnis erfolgt eine Zerlegung in untergeordnete Betriebsziele, die in Teilschritt d4) bei einem Aufruf der Hilfsmodule M10 bis M30 an diese weitergereicht werden. Die Teilbetriebsziele können entweder konkrete Stellgrößen enthalten, die vom jeweiligen Hilfsmodul schon umgesetzt werden können, z.B. durch Abregelung einer Last oder einer erneuerbaren Energiequelle. Alternativ kann sich jedoch auch ein komplexerer Beitrag einer unterlagerten Netzebene ergeben, und zumindest ein Teil der Hilfsmodule (hier das Hilfsmodul M10) kann so aufgerufen werden, als wäre es selbst das oberste Steuermodul. Mit anderen Worten wird eine Vorgabe für ein untergeordnetes Betriebsziel an das Hilfsmodul übergeben (z.B. Einhaltung von Grenzwerten in der zugehörigen unterlagerten Netzebene), und es findet beim Hilfsmodul eine nachgelagerte Zerlegung bzw. Optimierung und ein nachgelagerter Aufruf von weiteren untergeordneten Hilfsmodulen statt, analog zu den Teilschritten d3) und d4) beim ersten Steuermodul M1. Prinzipiell können die Steuermodule in den untersten Hierarchieebenen, die z.B. über ihre Aktoren die relevanten Stellgrößen direkt beeinflussen können, auch jeweils von mehreren übergeordneten Steuermodulen aufgerufen werden, z.B. wenn die Aktorstellung für mehrere Teil-Betriebsziele relevant ist.

Die einzelnen Steuermodule (also das erste Steuermodul M1 und die Hilfsmodule M10 bis M1000 auf allen relevanten Ebenen) können jeweils über Software-Applikationen automatisiert betrieben werden, wobei diese Software-Applikationen z.B. über die Vielzahl von Steuermodulen verteilt sein können. Die einzelnen Steuermodule können z.B. als Edge Devices ausgestaltet sein. In den unteren Netzebenen N5 und N7 können die Steuermodule Bestandteil der Ausgleichseinrichtungen 51 bzw. 71 sein oder zumindest über Kommunikationsschnittstellen mit diesen verbunden sein. Allgemein ist auch eine Bereitstellung der Applikationen für die jeweiligen Steuermodule auf einem zentralen Rechner in einer Netzleitstelle oder in einer Cloud denkbar, von wo aus sie dann gegebenenfalls auf die einzelnen Steuermodule migriert werden.

### Bezugszeichenliste

- 1: Stromnetz
- 11: Wasserkraftwerk
- 12: Kernkraftwerk
- 13: Kohlekraftwerk
- 14: Hochseewindpark
- 31: überregionale Ausgleichseinrichtung
- 32: Gaskraftwerk
- 33: Wasserkraftwerk
- 34: Großindustrie
- 51: regionale Ausgleichseinrichtung
- 52: Speicher
- 53: Solarpark
- 54: Windpark
- 55: Industrie
- 71: lokale Ausgleichseinrichtung
- 72: Speicher
- 73: Windanlage
- 74: Blockheizkraftwerk
- 75: Haushalte
- 76: Ladestation
- 100: Steuerungssystem
- d1): Identifizieren der Hilfsmodule
- d2): Übermitteln der Zustandsinformation
- d3): Ermitteln der untergeordneten Betriebsziele
- d4): Aufrufen des Hilfsmoduls
- A: Aktor
- A1-A3: Abstraktionsebenen
- H1-H4: Hierarchieebenen
- M1: erstes Steuermodul
- M10-M30: Hilfsmodule
- M100-M200: untergeordnete Hilfsmodule
- M1000: weiter untergeordnetes Hilfsmodul
- M2000: weiter untergeordnetes Hilfsmodul
- N1-N7: Netzebenen
- S: Sensor
- S1-S3: Systemebenen

## Patentansprüche

1. Verfahren zur Steuerung eines Stromnetzes (1) mittels einer Mehrzahl von Steuermodulen (M1-M1000), wobei das Stromnetz (1) hierarchisch in eine Mehrzahl von Systemebenen (S1-S3) strukturiert ist, umfassend die folgenden Schritte:
a) Auswählen einer der Systemebenen (S1),
b) Festlegen eines ersten Betriebsziels, welches der ausgewählten Systemebene (S1) zugeordnet ist und welches einer ausgewählten Abstraktionsebene (A1) für Zielvorgaben zugeordnet ist,
c) Bereitstellen einer Topologie des Stromnetzes (1),
d) Aufrufen eines mit dem ersten Betriebsziel assoziierten ersten Steuermoduls (M1), wobei das Aufrufen des ersten Steuermoduls (M1) die folgenden Teilschritte zur Folge hat:
d1) Identifizieren wenigstens eines Hilfsmoduls (M10,M20) des ersten Steuermoduls (M1), wobei das Hilfsmodul (M10,M20) einer bezüglich der ausgewählten Systemebene (S1) und/oder bezüglich der ausgewählten Abstraktionsebene (A1) untergeordneten hierarchischen Ebene zugeordnet ist,
d2) Anfordern wenigstens einer Zustandsinformation bei wenigstens einem Hilfsmodul (M10,M20) und Empfangen der Zustandsinformation,
d3) Ermitteln wenigstens eines untergeordneten Betriebsziels unter Verwendung des ersten Betriebsziels und der empfangenen Zustandsinformation sowie
d4) Übermitteln des untergeordneten Betriebsziels an ein damit assoziiertes Hilfsmodul (M10,M20) und Aufrufen dieses assoziierten Hilfsmoduls (M10,M20).

2. Verfahren nach Anspruch 1, bei welchem die in Teilschritt d2) von dem Hilfsmodul (M10,M20) empfangene Zustandsinformation wenigstens eine untergeordnete Zustandsinformation enthält, die das Hilfsmodul (M10,M20) von einem weiteren, dem Hilfsmodul (M10,M20) untergeordneten Hilfsmodul (M100,M200) anfordert und empfängt.

3. Verfahren nach Anspruch 2, wobei das Aufrufen des mit dem untergeordneten Betriebsziel assoziierten Hilfsmoduls (M10,M20) analog zum Aufrufen des ersten Steuermoduls (M1) erfolgt, so dass dieses Aufrufen, bezogen auf das assoziierte Hilfsmodul (M10,M20), zu den Teilschritten d1) bis d4) analoge Teilschritte zur Folge hat.

4. Verfahren nach einem der vorhergehenden Ansprüche, bei welchem dasselbe Hilfsmodul (M10,M20) bei Empfangen der Zustandsinformation gemäß Schritt d2) und beim Aufrufen gemäß Schritt d4) zum Einsatz kommt.

5. Verfahren nach einem der vorhergehenden Ansprüche, bei welchem die insgesamt aufgerufenen Steuermodule (M1-M1000) wenigstens drei unterschiedlichen Systemebenen (S1-S3) zugeordnet sind.

6. Verfahren nach einem der vorhergehenden Ansprüche, bei welchem die insgesamt aufgerufenen Steuermodule (M1-M1000) wenigstens zwei unterschiedlichen Systemebenen (S1-S3) und wenigstens zwei unterschiedlichen Abstraktionsebenen (A1-A3) zugeordnet sind.

7. Verfahren nach einem der vorhergehenden Ansprüche, bei welchem die unterschiedlichen Abstraktionsebenen (A1-A3) wenigstens zwei der folgenden Abstraktionsebenen für Zielvorgaben umfassen:
- die Angabe eines übergeordneten Betriebsziels für das Stromnetz (1), wobei das übergeordnete Betriebsziel aus mehreren Teil-Betriebszielen zusammengesetzt ist,
- die Angabe eines Teil-Betriebsziels für das Stromnetz (1), insbesondere eines Teil-Betriebsziels zur Energieeffizienz, zur Wirtschaftlichkeit und/oder zur Treibhausgasemission,
- die Angabe eines Ziels oder Grenzwertes für eine aus mehreren Teil-Messgrößen zusammengesetzte Messgröße, insbesondere eine zusammengesetzte Messgröße zur Netzstabilität, zu Netzverlusten oder zur Einspeisung von erneuerbar erzeugter elektrischer Energie,
- die Angabe eines Ziels oder Grenzwertes für eine einzeln messbaren Teil-Messgröße, insbesondere eine Leistung, eine Spannung oder eine Stromstärke,
- die Angabe einer Priorisierung verschiedener topologischer Zustände des Stromnetzes (1).

8. Verfahren nach einem der vorhergehenden Ansprüche, bei welchem wenigstens eines der aufgerufenen Hilfsmodule (M1-M1000) einem Verteilnetz (N3,N5,N7) des Stromnetzes (1) zugeordnet ist, insbesondere einem Mittelspannungsnetz (N5) oder Niederspannungsnetz (N7).

9. Verfahren nach einem der vorhergehenden Ansprüche, bei welchem in Schritt c) eine automatisierte Bestimmung der Topologie des Stromnetzes (1) erfolgt.

10. Verfahren nach einem der vorhergehenden Ansprüche, bei welchem in Schritt d1) eine Mehrzahl von Hilfsmodulen (M10,M20,M30) identifiziert wird, von welchen in Schritt d2) Zustandsdaten empfangen werden und/oder welche in Schritt d4) aufgerufen werden.

11. Verfahren nach einem der vorhergehenden Ansprüche, bei welchem in Schritt d2) zusätzlich zu der wenigstens einen Zustandsinformation wenigstens eine Information zu einem Stellbereich und/oder einer Sensitivität angefordert und empfangen wird.

12. Verfahren nach einem der vorhergehenden Ansprüche, bei welchem das Ermitteln des wenigstens einen untergeordneten Betriebsziels in Teilschritt d3) durch Lösen eines Optimierungsproblems erfolgt.

13. Verfahren nach einem der vorhergehenden Ansprüche, bei welchem in Teilschritt d3) mehrere untergeordnete Betriebsziele ermittelt werden, wobei Teilschritt d4) für jedes dieser untergeordneten Betriebsziele ausgeführt wird.

14. System zur Steuerung eines Stromnetzes (1), wobei das Stromnetz (1) hierarchisch in eine Mehrzahl von Systemebenen (S1-S3) strukturiert ist, wobei das System eine Mehrzahl von Steuermodulen (M1-M1000) aufweist,
- wobei das jeweilige Steuermodul (M1-M1000) mit wenigstens einem Betriebsziel assoziiert ist, welches einer ausgewählten Systemebene (S1-S3) des Stromnetzes (1) zugeordnet ist und welches einer ausgewählten Abstraktionsebene (A1-A3) für Zielvorgaben zugeordnet ist,
- und wobei wenigstens eines der Steuermodule (M1) dazu ausgebildet ist, bei seinem Aufruf die folgenden Schritte auszuführen:
d1) Identifizieren von wenigstens einem Hilfsmodul (M10,M20) des aufgerufenen Steuermoduls (M1), wobei das jeweilige Hilfsmodul (M10,M20) einer bezüglich der ausgewählten Systemebene (S1) und/oder bezüglich der ausgewählten Abstraktionsebene (A1) untergeordneten hierarchischen Ebene zugeordnet ist,
d2) Anfordern und Empfangen von wenigstens einer Zustandsinformation von wenigstens einem Hilfsmodul (M10,M20),
d3) Ermitteln von wenigstens einem untergeordneten Betriebsziel unter Verwendung des ersten Betriebsziels und der empfangenen Zustandsinformation sowie
d4) Übermitteln des untergeordneten Betriebsziels an ein damit assoziiertes Hilfsmodul (M10,M20) und Aufrufen dieses assoziierten Hilfsmoduls (M10,M20).

15. Computerprogrammprodukt umfassend Befehle, wobei die Befehle bei der Ausführung des Computerprogrammprodukts auf einem Computer diesen dazu veranlassen, das Verfahren gemäß einem der Ansprüche 1 bis 13 auszuführen.
